# EUROPEAN PATENT APPLICATION

(11) **EP 2 626 943 A1**
(43) Date of publication of application: **14.08.2013**
(21) Application number: 11830447.6
(22) Date of filing: 19.08.2011
(51) Int. Cl.: H01M 10/052, H01M 10/0567, H01M 10/0568, H01M 10/0569

(54) **LITHIUM-ION BATTERY**

(30) Priority: 05.10.2010 JP 2010225314
(71) Applicant: Shin-Kobe Electric Machinery Co., Ltd., Tokyo 104-0044 (JP)
(72) Inventor: NISHIMURA Katsunori, Hitachi-shi Ibaraki 319-1292 (JP); KUMASHIRO Yoshiaki, Hitachi-shi Ibaraki 319-1292 (JP); KOHNO Kazushige, Hitachi-shi Ibaraki 319-1292 (JP); KOBAYASHI Toshiyuki, Hitachi-shi Ibaraki 319-1292 (JP)
(74) Representative: Calderbank, Thomas Roger
(86) International application number: PCT/JP2011/068775
(87) International publication number: WO 2012/046514

(57) **Abstract**

The present invention aims to improve the fire resistance of an electrolytic solution used for a lithium-ion battery and improve the life characteristics of the lithium-ion battery. In the lithium ion battery of the present invention, specific amounts of ethylene carbonate and dimethyl carbonate are used for a non-aqueous electrolytic solution, and trimethyl phosphate is added thereto. Specifically, the non-aqueous electrolytic solution contains 60 vol% or more of ethylene carbonate (EC) and dimethyl carbonate (DMC). The volume ratio of DMC to the sum of EC and DMC is 0.3 to 0.6, and the non-aqueous electrolytic solution contains 3 to 5 wt% of trimethyl phosphate (TMP) with respect to the total weight of the non-aqueous electrolytic solution. Such a non-aqueous electrolytic solution has an effect of improving the self-fire extinguishing property, and thus improves the safety of the lithium-ion battery.

## Description

### Technical Field

The present invention relates to a lithium-ion battery, and a power supply and an appliance system using the lithium-ion battery.

### Background Art

A lithium-ion battery that does not easily ignite even when abnormal heat generation occurs in the lithium-ion battery has been developed. JP Patent Publication No. 8-022839A (Patent Literature 1) and JP Patent Publication No. 8-088023A (Patent Literature 2) disclose improving the self-fire extinguishing function of an electrolytic solution by adding trimethyl phosphate (TMP) thereto with a view to improve the fire resistance of the electrolytic solution.

### Citation List

### Patent Literature

Patent Literature 1: JP Paten Publication No. 8-022839A
Patent Literature 2: JP Patent Publication No. 8-088023A

### Summary of Invention

### Technical Problem

There are cases where trimethyl phosphate (TMP) that exists in an electrolytic solution as an additive is reduced on an anode. Consequently, Li becomes oxidized on the anode electrode, resulting in a capacity loss.

The present invention aims to suppress a capacity loss while maintaining the fire resistance of an electrolytic solution.

### Solution to Problem

An aspect of the present invention that solves the aforementioned problem is a battery that uses an electrolytic solution to which a small amount of TMP is added and that contains a large composition of dimethyl carbonate (EMC). Specifically, there is provided a lithium-ion battery including a cathode, an anode, and a non-aqueous electrolytic solution. The non-aqueous electrolytic solution contains 60 vol% or more of ethylene carbonate (EC) and dimethyl carbonate (DMC). The volume ratio of DMC to the sum of EC and DMC is 0.3 to 0.6. The non-aqueous electrolytic solution contains LiPF₆ as an electrolyte, and contains 3 to 5 wt% of trimethyl phosphate (TMP) with respect to the total weight of the non-aqueous electrolytic solution.

### Advantageous Effects of Invention

According to the aforementioned composition, it is possible to suppress a capacity loss in a lithium-ion battery that maintains the fire resistance of an electrolytic solution and thus has high safety. The present specification incorporates the content of the specification and/or drawings of Japanese patent application JP 2010-225314 that is the basic application of the present application.

### Brief Description of Drawings

Fig. 1 shows a cross-sectional structure of a lithium-ion battery.
Fig. 2 shows a battery system.

### Description of Embodiments

Lithium-ion batteries have high specific energy density and thus attract attention as batteries for use in battery systems for mobile objects (e.g., electric vehicles) or for stationary use (e.g., for electric power storage). In particular, examples of electric vehicles include a zero-emission electric vehicle having no engine mounted thereon, a hybrid electric vehicle having both an engine and a secondary battery mounted thereon, and a plug-in hybrid electric vehicle that is directly charged with electricity delivered from an electrical grid. Further, the lithium-ion batteries are also expected to be used as stationary electric power storage systems that store power and supply power in case of emergency when a power system is interrupted.

In response to such a variety of uses, the lithium-ion batteries are required to provide high outputs. That is, a power supply for a mobile object is required to have an output performance of a 0.1 C-rate or higher when the operation stops, and a power supply for stationary use, which is intended to back up power when there is a power failure or to perform load leveling, is also required to have an output performance of 1 C-rate to 0.2 C-rate. The "1 C-rate" herein refers to the charge or discharge rate for when the rated capacity of a lithium-ion battery is used up in one hour. The "0.2 C-rate" refers to the charge or discharge rate when a large current corresponding to the amount of current fives times that of the 1 C-rate is used, and the "0. 1 C-rate" refers to the charge or discharge rate when a large current corresponding to the amount of current ten times that of the 0.1 C-rate is used.

When a lithium-ion battery is used for a long duration, the performance of the electrodes would decrease, and thus the amount of lithium that can be charged or discharged (e.g., the amount of electricity) would decrease. When a large current is flowed in such a condition, there may be cases where the current density per unit area of the electrodes would increase, so that dendritic lithium would grow on the anode electrode. When such a phenomenon further progresses, a short may occur in the battery, resulting in local heat generation. Meanwhile, when an external force is applied to the lithium-ion battery, abnormal heat generation may occur due to crush, break, or the like. In such a condition, an electrolytic solution may ignite. Further, if there is fire around the battery when the electrolytic solution leaks from the battery, there is a possibility that the electrolytic solution may ignite. Therefore, a battery that contains an electrolytic solution, which does not easily ignite, and has a fire extinguishing function is desirable. In addition to adding trimethyl phosphate to improve the self-fire extinguishing function of the electrolytic solution as described in Patent Literature 1 and 2 above, various means for suppressing ignition of an electrolytic solution have been studied (e.g., JP Paten Publication No. 2002-343426A, JP Paten Publication No. 2005-353579A, JP Paten Publication No. 2007-149619A, JP Paten Publication No. 2007-220313A, JP Paten Publication No. 2009-4357A, and JP Paten Publication No. 2010-27610A).

The inventors of the present application have conducted concentrated studies for increasing the self-fire extinguishing function of an electrolytic solution using ethylene carbonate to improve the safety of the lithium-ion battery as well as for retaining the battery capacity for a long duration, and found means for achieving both an increase in the fire resistance and an increase in the life of the lithium-ion battery.

The lithium-ion battery that is the subject of the present invention is a secondary battery including a cathode, an anode, and a non-aqueous electrolytic solution. The first means is the use of an electrolytic solution that contains ethylene carbonate (EC) and dimethyl carbonate (DMC) as solvents, in which the total amount of the solvents is greater than or equal to 60 vol%, the volume ratio of dimethyl carbonate to the sum of ethylene carbonate and dimethyl carbonate (DMC/EC + MC) is 0.3 to 0.6; contains LiPF₆ as an electrolyte; and contains added thereto 3 to 5 wt% of trimethyl phosphate (TMP) with respect to the total weight of the electrolytic solution. According to such a composition, it is possible to use trimethyl phosphate (TMP) as a fire retardant and allow the electrolytic solution at a predetermined composition to exhibit a self-fire extinguishing property. In particular, the inventors found that applying the aforementioned electrolytic solution to a lithium-ion battery that uses a cathode containing Mn and an anode containing graphite will provide excellent safety and prolong the life of the battery. The present invention can be applied not only to lithium-ion batteries but also to electrochemical devices that can store and use electrical energy through occlusion and release of ions on/from the electrodes. Being excellent in safety, the present invention is suitable for a battery system for a large mobile object or for stationary use.

Hereinafter, the present invention will be described in further detail using a lithium-ion battery as an example, with reference to the drawings.

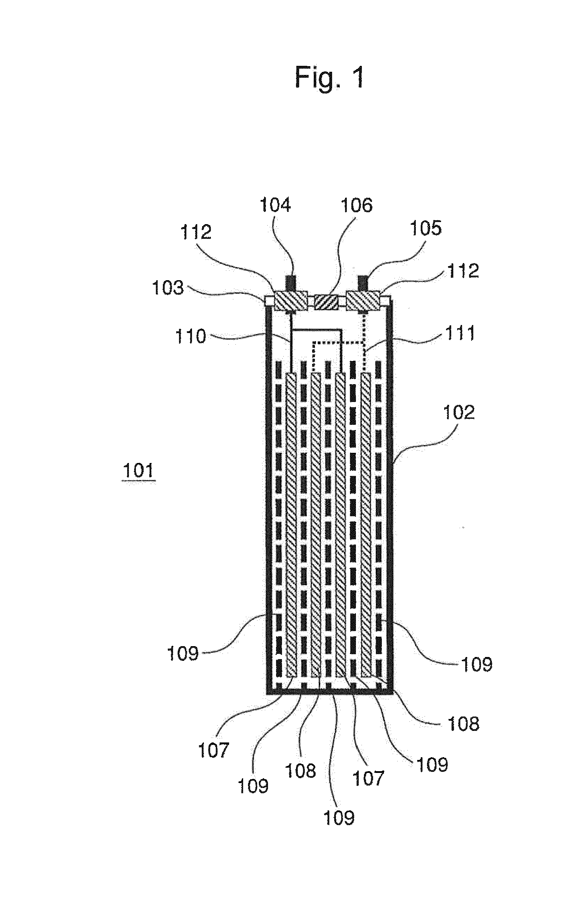

Fig. 1 schematically shows the internal structure of a lithium-ion battery 101. In the lithium-ion battery 101, an electrode group including cathodes 107, anodes 108, and separators 109 inserted between each of the two electrodes is accommodated in a battery case 102 in a hermetically sealed state. A cap 103 is provided on the top of the battery case 102, and the cap 103 has a cathode external terminal 104, an anode external terminal 105, and a liquid injection port 106. After the electrode group is accommodated in the battery case 102, the cap 103 is put on the battery case 102, and the outer circumference of the cap 103 is welded so that the cap 103 is integrated with the battery case 102. For attaching the cap 103 to the battery case 102, a method other than welding, such as caulking and bonding can also be used.

The structure of the electrode group may be in any shape such as a stack of rectangular electrodes shown in Fig. 1, a cylindrical shape, or a flat shape. The shape of the battery case may be selected in keeping with the shape of the electrode group, such as a cylindrical shape, a flat ellipse, or an angular shape.

Examples of the method of injecting an electrolytic solution include a method of removing the cap 103 from the battery case 102 and directly adding the solution to the electrode group and a method of adding the solution from the liquid injection port 106 provided in the cap 103 (Fig. 1). The liquid injection port 106 of the lithium -ion battery shown in Fig. 1 is provided on the upper face of the battery case 102. After the electrode group is accommodated in the battery case 102 and the battery case 102 is hermetically sealed off, an electrolytic solution containing an electrolyte and a non-aqueous solvent is dropped from the liquid injection port 106, and the battery case 102 is caulked with a predetermined amount of the electrolytic solution. Then, the liquid injection port 106 is hermetically sealed off. It is also possible to provide the liquid injection port 106 with a safety mechanism. As a safety mechanism, a pressure valve for releasing the pressure in the battery case may be provided.

The cathode 107 contains a cathode active material, a conductive material, a binder, and a current collector. The cathode active material is preferably a composite oxide containing Mn. This is because Mn has a low response to TMP in comparison with Co, and thus is suitable for a long operating life. A typical example of the cathode active material is LiMn₂O₄ with a spinel crystal structure. Using other cathode active materials such as those described below can also provide the advantage of the self-fire extinguishing property of the electrolytic solution: LiMn0₃, LiMn₂O₃, LiMnO₂, Li₄Mn₅O₁₂, LiMn₂₋ₓMₓO₂ (Note that M = Co, Ni, Fe, Cr, Zn, Ta, x = 0.01 to 0.2), Li₂Mn₃MO₈ (Note that M = Fe, Co, Ni, Cu, Zn), Li₁₋ₓAₓMn₂O₄ (Note that A = Mg, B, Al, Fe, Co, Ni, Cr, Zn, Ca, x = 0.01 to 0.1), LiNi₁₋ₓMₓO₂ (Note that M = Co, Fe, Ga, x = 0.01 to 0.2), LiFeO₂,Fe₂(SO₄)₃, LiCo₁₋ₓMₓO₂ (Note that M = Ni, Fe, Mn, x = 0.01 to 0.2), LiNi₁₋ₓMₓO₂ (Note that M = Mn, Fe, Co, Al, Ga, Ca, Mg, x = 0.01 to 0.2), and LiMnPO₄. In particular, when a Mn oxide with a spinel crystal structure or an oxide obtained by substituting Li or another dissimilar element for a part of Mn is used, it becomes possible to achieve both an increase in the fire resistance and an increase in the life. This is because, as a cathode containing Mn has a high bonding force to oxygen and thus is unlikely to release oxygen at a high temperature, such a cathode it is considered to contribute to the safety of the lithium-ion battery in conjunction with the self-fire extinguishing property of TMP. The grain diameter of the cathode active material is preferably less than or equal to the thickness of the compound layer. When the cathode active material powder contains coarse grains with a size greater than or equal to the thickness of the compound layer, the coarse grains are removed through sieve or wind classification in advance so that grains with a size less than or equal to the thickness of the compound layer are fabricated.

As the cathode active material contains oxide and thus has high electric resistance, it is preferably mixed with a conductive material for supplementing the electrical conductivity. As the conductive material, conductive fibers can be used, for example. Adding conductive fibers to the cathode compound can form an electron network and improve the rate property of the cathode. Examples of the conductive fibers include vapor-grown carbon, carbon nanotube, fibers fabricated by carbonizing a pitch (petroleum, coal, or a by-product such as coal tar) as a raw material at a high temperature, and carbon fibers fabricated from acrylic fibers (Polyacrylonitrile). Alternatively, it is also possible to use a metal material that has lower electrical resistance than the cathode active material and does not oxidize or dissolve at the charge/discharge potentials of the cathode (typically, 2.5 to 4.2 V). For example, it is possible to use a corrosion-resistant metal such as titanium or gold, carbide such as SiC or WC, or nitride such as Si₃N₄ or BN. As a method of fabricating such conductive material, the existing method such as a melting method or a vapor deposition method can be used. The amount of conductive fibers to be added is the minimum required amount with respect to the amount of the cathode active material. For example, a transition metal oxide has a specific gravity of 4 to 5/cm³ and the weight composition thereof in the cathode compound is 85 %, while the weight composition of the conductive carbon fibers is 3 to 10 %, and in particular, preferably 4 to 8 %. In addition, as an auxiliary conductive material of carbon fibers, it is also possible to add a carbon material with a high specific surface area such as, for example, carbon black or activated carbon, as needed. The thus added carbon material acts on the conductivity in an auxiliary manner, and can further increase the conductivity as compared to when only conductive fibers are used. With a small amount of fibers added, the two cathode active materials are allowed to communicate with each other via the conductive fibers. Thus, the small amount of conductive fibers can lower the resistance of the cathode, and allows charge or discharge with a large current without lowering the specific energy density of the battery. The other components function as binders.

A cathode compound slurry is prepared by mixing a cathode active material containing Mn, a conductive material such as carbon black or carbon fibers, a fluorine-based binder, a rubber-based binder, and a solvent. The cathode compound slurry is applied to the cathode current collector and then is dried to fabricate the cathode 107. A method for applying the cathode slurry is not specifically limited and known methods can be adopted such as a doctor blade method, a dipping method, or a spray method. After the cathode slurry is applied to the current collector, the organic solvent is dried and the cathode is pressure-molded through roll pressing, so that the cathode can be fabricated. When an imide-based binder is used, high-temperature thermal treatment at 300 °C or higher is performed in an inert gas atmosphere containing nitrogen and the like to harden the binder in the electrode. When the processes of from application to drying are performed a plurality of times, it becomes possible to stack a plurality of compound layers on the current collector.

The material, shape, fabrication method, and the like for the current collector are not limited, and any current collector can be used. For the cathode current collector, a metal foil with a thickness of 10 to 100 µm, a perforated metal foil with a thickness of 10 to 100 µm and a pore diameter of 0.1 to 10 mm, an expanded metal, a foamed metal plate, or the like is used. The most suitable material is aluminum, but stainless steel, titanium, or the like can also be used.

The anode 108 includes an anode active material, a binder, and a current collector. Examples of the anode active material include carbon materials such as graphite, graphitizable carbon, and non-graphitizable carbon, which can electrochemically occlude or release lithium ions, a mixed anode thereof, or a mixed anode or a composite anode of a carbon material and a metal or the aforementioned alloy. As the anode active material, a carbonaceous material containing graphite or amorphous carbon, in particular, a carbon material with a graphene structure is preferably used. Using an electrolytic solution of the present invention can, even when the main component of the anode active material is graphite, effectively suppress reductive decomposition of TMP and thus can prevent a capacity loss of the battery. Examples of the carbonaceous material include natural graphite, artificial graphite, mesophase carbon, expanded graphite, carbon fibers, vapor-grown carbon fibers, a pitch-based carbonaceous material, needle coke, petroleum coke, and polyacrylonitrile carbon fibers. Such graphite material may be mixed with amorphous carbon or carbon, a part of which does not have a graphite crystal structure (i.e., in which the graphite structure is not developed). Examples of the amorphous carbon material include carbon black and an amorphous carbon material synthesized from 5- or 6-membered cyclic hydrocarbons or a cyclic oxygen-containing organic compound through thermal decomposition. Other examples of the anode active material include metals such as aluminum, silicon, and tin that are alloyed with lithium.

Typically, an anode active material used is powder. The grain diameter of the anode active material is desirably less than or equal to the thickness of the compound layer. When the anode active material powder contains coarse grains with a size greater than or equal to the thickness of the compound layer, the coarse grains are removed through sieve or wind classification in advance so that grains with a size less than or equal to the thickness of the compound layer are used. For the anode compound, the anode active material and a binder are mixed so that the powers are combined and are fixed on the current collector at the same time. The material, shape, and fabrication method of the current collector are not limited, and any current collector can be used. For example, a copper foil with a thickness of 10 to 100 µm, a perforated copper foil with a thickness of 10 to 100 µm and a pore diameter of 0.1 to 10 mm, an expanded metal, a foamed metal plate, or the like is used. In addition to copper, materials such as stainless steel, titanium, and nickel can also be used.

When high-rate charge and discharge are necessary, a conductive material such as carbon black may also be added to the anode as with the cathode. The conductive material is not involved with occlusion or release of lithium ions, and functions as a medium for electrons. Thus, it does not affect an occlusion or release reaction of lithium ions for the anode active material. For the conductive material, a conductive polymer material such as polyacene, polyparaphenylene, polyaniline, or polyacetylene can be used besides the aforementioned material.

After attaching an anode slurry obtained by mixing an anode active material, a binder, and an organic solvent to the current collector by a doctor blade method, a dipping method, a spray method, or the like, the organic solvent is dried and the anode is pressure-molded through roll pressing, so that the anode can be fabricated. When an imide-based binder is used, high-temperature thermal treatment at 300 °C or higher is performed in an inert gas atmosphere containing nitrogen and the like to harden the binder in the electrode. When the processes of from application to drying are performed a plurality of times, it becomes possible to form multiple compound layers on the current collector.

The separator 109 is inserted between the cathode 107 and the anode 108 to prevent a short between the cathode 107 and the anode 108. The separator 109 is also inserted between the electrode (an end portion of the cathode or the anode) and the battery case 102 to prevent a short between the cathode 107 and the anode 108 via the battery case 102. The separator 109 should allow lithium ions to transmit therethrough when the battery is charged and discharged. Thus, the separator 109 should be a porous body. Typically, a separator with a micropore diameter of 0.01 to 10 µm and a porosity of 20 to 90 % can be used for the lithium-ion battery 101. For the separator, it is possible to use a multilayer separator to which is welded a polyolefin-based polymer sheet containing polyethylene or polypropylene or a fluorine-based polymer sheet typified by a polyolefin-based polymer or polytetrafluoroethyle. It is also possible to form a mixture of ceramics and a binder in a thin layer on the surface of the separator 109 so that the separator 109 will not shrink when the battery temperature becomes high.

The stack is electrically connected to an external terminal via a lead wire. The cathode 107 is connected to the cathode external terminal 104 via a cathode lead wire 110. The anode 108 is connected to the anode external terminal 105 via the anode lead wire 111. Note that the lead wires 110 and 111 may be in any shape such as a wire shape or a plate shape. The shape and material of each of the lead wires 110 and 111 are not limited as long as they provide a structure that can reduce an ohmic loss when a current is flowed therethrough and the material does not react with the electrolytic solution. In addition, an insulating sealing material 112 is inserted between the cathode external terminal 104 or the anode external terminal 105 and the battery case 102 to prevent a short between the terminals. The insulating sealing material 112 can be selected from among a fluorine resin, a thermosetting resin, a glass hermetic seal, and the like. Any material that does not react with the electrolytic solution and is excellent in airtightness can be used.

When a current interruption mechanism that uses a resistor element with a positive temperature coefficient (PTC) is provided on the cathode lead wire 110 or the anode lead wire 111, a connection portion between the cathode lead wire 110 and the cathode external terminal 104, or a connection portion between the anode lead wire 111 and the anode external terminal 105, it becomes possible to, when the temperature in the battery becomes high, stop charge and discharge of the lithium-ion battery 101 to protect the battery. Note that the lead wires 110 and 111 may be in any shape such as a foil shape or a plate shape.

The material of the battery case 102 is selected from among materials that are corrosion-resistant to the non-aqueous electrolytic solution, such as aluminum, stainless steel, and nickel-plated steel. When the battery case 102 is electrically connected to the cathode lead wire 110 or the anode lead wire 111, the material of the lead wire is selected so that the quality of the material is not altered due to corrosion of the battery case or alloying with lithium ions at a portion where the lead wire is in contact with the non-aqueous electrolytic solution. After that, the cap 103 is tightly attached to the battery case 102 to seal off the entire battery. Among the methods of hermetically sealing off the battery are known technologies such as welding and caulking.

An electrolytic solution containing an electrolyte and a non-aqueous solvent is retained on the surfaces of and in the micropores of the separator 109 and each of the electrodes 107 and 108. The non-aqueous electrolytic solution of the present invention contains 60 vol% or more of ethylene carbonate (EC) and dimethyl carbonate (DMC), in which the volume ratio of DMC to the sum of EC and DMC is 0.3 to 0.6; contains LiPF₆ as an electrolyte; and contains 3 to 5 wt% of trimethyl phosphate (TMP) with respect to the total weight of the non-aqueous electrolytic solution.

The present invention allows an electrolytic solution, which contains LiPF₆ as a main electrolyte, to exhibit a self-fire extinguishing property.

LiPF₆ is decomposed by heat that is generated when the electrolytic solution ignites, and releases fluorine radicals. This has a function of trapping oxygen radicals that promote a combustion reaction and thus terminating the combustion reaction. If LiPF₆ is the main electrolyte, LiBF₄ may also be added. The amount of LiBF₄ added is preferably less than or equal to 2/8 the amount of LiPF₆ as the fluorine in LiPF₆ has a function of suppressing a combustion reaction. In the case of a lithium-ion battery that needs a large current, the electrical conductivity of an electrolytic solution is desirably high. Thus, the amount of LiBF₄ added is preferably set in the range of 1.5/8.5 to 0.5/9.5 the amount of LiPF₆. Alternatively, other electrolytes may also be used as long as they do not decompose on the cathode or the anode incorporated in the battery. For example, there are various types of lithium salts such as imide salts of lithium typified by LiClO₄, LiCF₃SO₃, LiCF₃CO₂, LiAsF₆, LiSbF₆, or lithium trifluoromethanesulfonyl imide. Note that the amount of LiPF₆ is preferably greater than or equal to 80 % of the total amount of the electrolyte.

By mixing ethylene carbonate (EC) and dimethyl carbonate (DMC) at a predetermined ratio, it becomes possible to allow the electrolytic solution to exhibit a self-fire extinguishing property. Note that other cyclic carbonates may also be contained. Ethylene carbonate (EC) has a high dielectric constant and is necessary to dissolve an electrolyte. The inventors consider that dimethyl carbonate (DMC) is necessary to exhibit a fire-extinguishing function of the electrolytic solution through a thermal decomposition reaction with TMP (described below). In order to provide such effect, it is necessary to increase the concentration of DMC in the solvent, and the total proportion of EC and DMC in the solvent is set to be greater than or equal to 60 %. In addition, the volume ratio of dimethyl carbonate to the sum of ethylene carbonate and dimethyl carbonate (DMC/EC + DMC) is set to 0.3 to 0.6. When ethylene carbonate and dimethyl carbonate satisfy the two conditions, it is possible to provide a sufficient self-fire extinguishing property by the addition of a small amount of TMP.

When the proportion of EC and DMC in the solvent is too small and the volume ratio of DMC to the sum of EC and DMC is too smaller than 0.3, the amount of DMC is relatively insufficient. Thus, a self-fire extinguishing property cannot be obtained when the concentration of TMP is reduced. When the volume ratio is too greater than 0.6, the amount of dimethyl carbonate is too large, so that a battery capacity loss would occur, and the combustion heat of the excessive DMC would exceed the heat of water vaporization generated from TMP. Thus, more than 5 % of TMP would be needed and a battery capacity loss would occur.

The ignition point of DMC (17 °C) is low. Thus, it is natural to consider that increasing the volume ratio of DMC would rather deteriorate the self-fire extinguishing property of the electrolytic solution. However, the inventors consider that due to the following fire extinguishing mechanism, DMC and TMP mutually acted, which improved the self-fire extinguishing property of the electrolytic solution. Although such a mechanism is a presumption, it can fully explain the results of examples below.

The boiling point of DMC is 90 °C. DMC is evaporated by heat that is generated when the electrolytic solution ignites, and the vapor concentration of DMC increases in the flame. Methoxy radicals (CH₃O■) are generated from DMC in the flame, and react with TMP to supply oxygen to TMP. Consequently, TMP is oxidized to form phosphoric acid or a phosphoric acid-based coating. When phosphoric acid is generated, water is generated. Thus, the evaporation heat of the water extinguishes the flame. In addition, as the phosphoric acid-based coating is formed on the upper surface of the electrolytic solution and interrupts contact between the organic components in the electrolytic solution and oxygen, combustion reactions are suppressed. Meanwhile, methoxy radicals reacted with TMP are combined with methyl that has been combined with the phosphorus atoms, thereby generating ethane gas, or capture hydrogen from methyl to generate methane gas. This can explain that the self-fire extinguishing property of the electrolytic solution is improved by an increase in the volume ratio of DMC.

Note that in the range that EC and DMC satisfy the aforementioned conditions, it is possible to improve the low-temperature characteristics and output characteristics by adding another solvent in an auxiliary manner. It is acceptable as long as such solvent does not decompose on the cathode or the anode incorporated in the battery of the present invention. Examples of the solvent include non-aqueous solvents such as propylene carbonate, buthylene carbonate, vinylene carbonate, γ-butyrolactone, diethyl carbonate, methyl ethyl carbonate, 1,2-dimethoxyethane, 2-methyltetrahydrofuran, dimethyl sulfoxide, 1,3-dioxolane, formamide, dimethylformamide, methyl propionate, ethyl propionate, phosphate triester, triethoxymethane, dioxolane, diethyl ether, sulfolane, 3-methyl-2-oxazolidinone, tetrahydro ran, 1,2-diethoxyethane, chloroethylene carbonate, and chloropropylene carbonate.

In addition, an electrolytic solution to which 0.1 to 2 % of one or both of vinylene carbonate or sultone is added as an additive is preferably used. This will form a stable coating on the cathode or the anode, which in turn will increase the high-temperature retention property and add a high-temperature resistant function of the battery in addition to the self-fire extinguishing property of the electrolytic solution.

In the present invention, as long as an electrolytic solution is used in which LiPF₆ is mainly used as an electrolyte, a predetermined concentration of TMP is added, and EC and DMC that satisfy the aforementioned conditions are contained, the present invention can be applied within the range that the gist of the present invention is not changed. The electrolyte can be used in a state of being contained in an ion-conducting polymer such as polyvinylidene fluoride or polyethylene oxide. In such a case, the separator can be omitted.

When a solid polymer electrolyte (a polymer electrolyte) is used, it is possible to use as the electrolyte an ion-conducting polymer such as ethylene oxide, acrylonitrile, polyvinylidene fluoride, methyl methacrylate, or polyethylene oxide of hexafluoropropylene. When such a solid polymer electrolyte is used, the separator 109 can be advantageously omitted.

According to the aforementioned composition, it is possible to provide an electrolytic solution that has a high self-fire extinguishing function and has, when a nonwoven fabric damped with the electrolytic solution is disposed in the vertical direction and the bottom of the nonwoven fabric is ignited, a fire extinguishing time of less than or equal to 3 seconds. The present invention will be described in further detail with reference to the following examples. Note that specific constituent materials, components, and the like in the examples may be changed as appropriate. In addition, it is also possible to add a known technology to the composition of the present invention.

### [Example 1]

The present example, will describe a lithium-ion battery in which Li_{1.03}Mn_{1.97}O₄ is used as the cathode active material, and artificial graphite is used for the anode. A lithium-ion battery that has the structure shown in Fig. 1 and differs only in the composition of the electrolytic solution was fabricated. Note that the cathode contains about 7 wt% of graphite powder and carbon black added to 87 wt% of the aforementioned oxide, and further contains 6 wt% of PVDF. Meanwhile, the anode contains 92 wt% of natural graphite and 8 % of PVDF.

For the electrolytic solution, EC, DMC, and EMC were mixed at various proportions. The electrolytic solution was prepared based on the solvent composition represented by the volume ratio (percentage) thereof to the entire volume, and the amount of TMP added represented by the weight ratio (percentage) thereof to the weight of the electrolytic solution. Table 1 shows the details of each battery (cell) produced. As is apparent from Table 1, the type and the concentration of the electrolyte, the presence or absence of a fire retardant and the amount of addition thereof, the EC composition, the DMC composition, and the EMC composition are changed. As the charge conditions, the batteries were charged with a constant current (10 A) corresponding to the 1 C-rate until the battery voltage reached 4.2 V from the open-circuit state, and after the battery voltage reached 4.2 V, the voltage was maintained to continue the charge form 30 minutes. After that, the charge was stopped and a pause period of 30 minutes was provided. Next, discharge was started with a constant current of 10 A, and the discharge was continued until the battery voltage reached 3.0 V. The discharge capacity at this time was set as the initial capacity of the battery. It was 10.0 ± 0.1 Ah form all of the batteries. After the completion of the discharge, a pause of 30 minutes was provided, and then charge was resumed, and 10 cycles of the charge and discharge test were conducted with a current (10 A) corresponding to the 1 C-rate. Then, the capacity at that time (the discharge capacity after the cycle test) was measured. The results are indicated at the second column from the right of Table 1.
[Table 1]

**Table 1**

| Cell | Electrolyte | Fire Retardant | EC Composition (vol%) | DMC Composition (vol%) | EMC Composition (vol%) | Discharge Capacity (Ah) | Fire Extinguishing Time |
|---|---|---|---|---|---|---|---|
| 1 (Comparative Example) | 1M LiPF₆ | None | 40 | 60 | 0 | 10.0 | 10-20 |
| 2 | 1M LiPF₆ | 1 wt% TMP | 40 | 60 | 0 | 10.0 | 5-10 |
| 3 | 1M LiPF₆ | 3wt% TMP | 40 | 60 | 0 | 10.0 | 1-3 |
| 4 | 1M LiPF₆ | 5wt% TMP | 40 | 60 | 0 | 10.0 | 0-1 |
| 5 (Comparative Example) | 1M LiPF₆ | 7wt% TMP | 40 | 60 | 0 | 9.5 | 0-1 |
| 6 (Comparative Example) | 1M LiPF₆ | 10wt% TMP | 40 | 60 | 0 | 8.8 | 0-1 |
| 7 | 1M LiPF₆ | 5wt% TMP | 50 | 50 | 0 | 10.0 | 0-1 |
| 8 | 1M LiPF₆ | 5wt% TMP | 60 | 40 | 0 | 10.0 | 0-1 |
| 9 | 1M LIPF₆ | 5wt% TMP | 30 | 45 | 25 | 9.8 | 1-3 |
| 10 (Comparative Example) | 1M LiPF₆ | 8wt% TMP | 20 | 30 | 50 | 9.1 | 1-3 |

It was found that a cell 1 (Comparative Example) without TMP added thereto has a high discharge capacity and has excellent life characteristics. However, when a nonwoven fabric was damped with the electrolytic solution of the cell 1 and an ignition test was conducted with a lighter, a time as long as 10 to 20 seconds was needed to extinguish the fire. Thus, the cell 1 was found to have almost no self-fire extinguishing property.

A cell 2 was also found to have excellent life characteristics, but have a fire extinguishing time of 5 to 10 seconds, which showed an insufficient self-fire extinguishing property.

The life characteristics of each of cells 3 and 4 (Examples) were found to be about equal to those of the cell 1. Meanwhile, under a discharge condition with a large current (0.2 C-rate, a current of 50 A), the discharge capacity tended to be slightly higher than those of the cells 1 and 2 (the discharge capacity of the cell 1 was 8.4 Ah, while those of the cells 3 and 4 were 8.5 Ah and 8.6 Ah, respectively). This is because, when TMP is added to the electrolytic solution, the viscosity of the electrolytic solution decreases and thus the conductivity increases by about 10 %. Further, when the fire extinguishing time of the electrolytic solutions was inspected, it was found that the fire extinguishing time of each of the electrolytic solutions was less than or equal to 3 seconds, which showed a sufficient self-fire extinguishing function.

With respect to cells 5 and 6 (Comparative Examples), the amounts of TMP added are as high as 7 wt% and 10 wt%, respectively. Thus, the fire extinguishing time was extremely short, as short as 0 to 1 second, but a decrease in the discharge capacity was prominent. This is estimated to be due to the fact that TMP decomposed on the graphite anode or the Mn cathode. When the direct-current resistance (DCR) of the cell 6 was measured after 10 cycles of the charge and discharge test, the direct-current resistance was found to be higher than those of the cells 2 to 4 by 50 to 70%.

Cells 7 and 8 (Examples) show the results of tests when the composition of DMC was changed. When a part of DMC was changed to EMC, a decrease in the discharge capacity of each of the cells was small, about equal to those of the cells 3 and 4 of the present invention. The fire extinguishing time was also less than or equal to 3 seconds.

A cell 9 (Example) shows an example where an electrolytic solution is used in which the composition of EC and DMC accounts for 60 %, and the rest is EMC. The fire extinguishing time in this case was 2 to 4 seconds, which is relatively long, but the average value was 3 seconds. Thus, the cell 9 was found to exhibit a self-fire extinguishing property close to those of the electrolytic solutions used for the cells 3 and 4. That is, the use of EMC resulted in a slight decrease in the self-fire extinguishing function, but still satisfied a target fire extinguishing time of 3 seconds. The capacity after the passage of the cycle test was also as high as 9.8 Ah, and no significant difference in life from the cells 3 and 4 was recognized.

A cell 10 (Comparative Example) is an example in which EC and DMC account for 50 %, and the rest is EMC. When the amount of EC and DMC was reduced to 50 %, the fire extinguishing time tended to become longer, and a fire extinguishing time of less than or equal to 3 seconds could not be achieved unless the amount of TMP was set to 8 wt%. This is considered to be due to the fact that the volume ratio of DMC in the electrolytic solution decreased, which prevented the promotion of the fire extinguishing function of TMP by DMC. As the concentration of TMP increased, the discharge capacity decreased. In addition, as the amount of TMP added increased, the life characteristics decreased.

The above results show that a balance between the fire resistance and the life can be kept when the composition of EC and DMC is set to be greater than or equal to 60%.

Even when EMC used for the cell 9 was changed to diethyl carbonate (DEC), a self-fire extinguishing function with a fire extinguishing time of 0 to 3 seconds was confirmed with the addition of 5 % of TMP, and thus, a capacity about equal to that of the cell 9 was obtained.

### [Example 2]

With respect to the electrolytic solution of the cell 9 in Example 1, the electrolyte was changed from LiPF₆ to LiBF₄, and the life characteristics and the self-fire extinguishing property were evaluated. When the electrolytic solution of the cell 9 in Table 1 was used, the conductivity of the electrolytic solution decreased, and thus, a decrease in the discharge capacity was prominent (a cell 9-2). This is estimated to be due to the fact that a decrease in the conductivity resulted in current crowding at a local portion of the electrode, which promoted deterioration of the anode active material or the cathode active material. When the amount of TMP that is necessary to achieve a fire extinguishing time of 3 seconds or less was considered, it was found to be 7 % (a cell 11). Thus, it is considered that a capacity loss also occurred due to the decomposition of TMP. Thus, it was found that when LiBF₄ is used at high concentration, the cell would deteriorate more than the cell of the present invention in terms of the life and fire resistance.

Thus, a cell 12 was evaluated that uses an electrolytic solution in which the concentration of LiBF₄ of the cell 11 is reduced to 0.2 M, and the rest is LiPF₆. Consequently, a fire extinguishing time of 0 to 1 second was achieved with the addition of 5 % of TMP, and a capacity as high as 9.9 Ah was also obtained.
[Table 2]

**Table 2**

| Cell | Electrolyte | Fire Retardant | EC Composition (vol%) | DMC Composition (vol%) | EMC Composition. (vol%) | Discharge Capacity (Ah) | Fire Extinguishing Time |
|---|---|---|---|---|---|---|---|
| 9-2 (Comparative Example) | 1M LiBF₄ | 5wt% TMP | 30 | 45 | 25 | 8.7 | 3-5 |
| 11 (Comparative Example) | 1M LiBF₄ | 7wt% TMP | 40 | 60 | 0 | 8.2 | 1-3 |
| 12 | 0.8M LiPF₆ +0.2M LiBF₄ | 5wt% TMP | 40 | 60 | 0 | 9.9 | 0-1 |

### [Example 3]

The present example is an example, in which examination was conducted by adding an additive to an electrolytic solution.

Four types of electrolytic solutions obtained by adding 0.5, 1.0, 1.5, and 2.0 vol% of vinylene carbonate to the electrolytic solution of the cell 4 were prepared. The fire extinguishing time of each of the electrolytic solutions was 0 to 1 second. Consequently, it was found that vinylene carbonate in the range examined in the present example does not affect the self-fire extinguishing property of the electrolytic solution.

Next, four types of electrolytic solutions obtained by adding 0.5, 1.0, 1.5, and 2.0 vol% of sultone to the electrolytic solution of the cell 4 were prepared. The sultone used herein is 1,3-propane sultone, but it may be replaced with sultone with a different molecular structure. The fire extinguishing time of each of the electrolytic solutions was 0 to 1 second. Consequently, it was found that sultone in the range examined in the present example does not affect the self-fire extinguishing property of the electrolytic solution, either. When sultone with a different molecular structure is used, the amount of sultone to be added is optimized so that the amount of decomposition on the cathode and the anode will not decrease the battery capacity significantly.

Next, a charge and discharge cycle test was conducted for a prismatic lithium-ion battery (Fig. 1) that uses the electrolytic solution of the cell 4 to which 1 vol% of vinylene carbonate was added. Consequently, the discharge capacity after the passage of 10 cycles was as high as 9.5 to 9.6 Ah. Likewise, even when 1 vol% of sultone was added, the capacity after the passage of 100 cycles was 9.4 to 9.5 Ah. The reason that the discharge capacity decreased with the addition of an increased amount of sultone is considered to be due to the fact that reductive decomposition of sultone occurred on the anode, which resulted in an increase in the irreversible capacity. However, as the addition of sultone can improve the high-temperature capacity retention of the cathode, it is possible to, by setting the amount of sultone added to 1 to 2 %, improve the high-temperature capacity retention without spoiling the effects of the present invention. The discharge capacity after 30 days have elapsed at 60 °C in the charged state was, when 2 vol% of sultone had been added, as high as 8.5 to 8.7 Ah, in comparison with a case where no soltone was added.
[Table 3]

**Table 3**

| Cell | Electrolyte | Fire Retardant | EC Composition (vol%) | DMC Composition (vol%) | EMC Composition (vol%) | VC (vol%) | Sultone (vol%) | Discharge Capacity (Ah) | Fire Extinguishing Time |
|---|---|---|---|---|---|---|---|---|---|
| 4 | 1M LiPF₆ | 5wt% TMP | 40 | 60 | 0 | 0 | 0 | 10.0 | 0-1 |
| 4-2 | 1M LiPF₆ | 5wt% TMP | 40 | 60 | 0 | 0.5 | 0 | 10.0 | 0-1 |
| 4-3 | 1M LiPF₆ | 5wt% TMP | 40 | 60 | 0 | 1.0 | 0 | 9.9 | 0-1 |
| 4-4 | 1M LiPF₆ | 5wt% TMP | 40 | 60 | 0 | 1.5 | 0 | 9.9 | 0-1 |
| 4-5 | 1M LiPF₆ | 5wt% TMP | 40 | 60 | 0 | 2.0 | 0 | 9.8 | 0-1 |
| 4-6 | 1M LiPF₆ | 5wt% TMP | 40 | 60 | 0 | 0 | 0.5 | 9.7-9.8 | 0-1 |
| 4-7 | 1M LiPF₆ | 5wt% TMP | 40 | 60 | 0 | 0 | 1.0 | 9.4-9.5 | 0-1 |
| 4-8 | 1M LiPF₆ | 5wt% TMP | 40 | 60 | 0 | 0 | 1.5 | 9.2-9.3 | 0-1 |
| 4-9 | 1M LiPF₆ | 5wt% TMP | 40 | 60 | 0 | 0 | 2.0 | 8.9-9.0 | 0-1 |

### [Example 4]

A plurality of prismatic lithium-ion batteries shown in Fig. 1 were fabricated using the identical specifications as those of the cell 4 in Example 2. The battery capacity was 10 Ah under a 1 C-rate discharge condition.

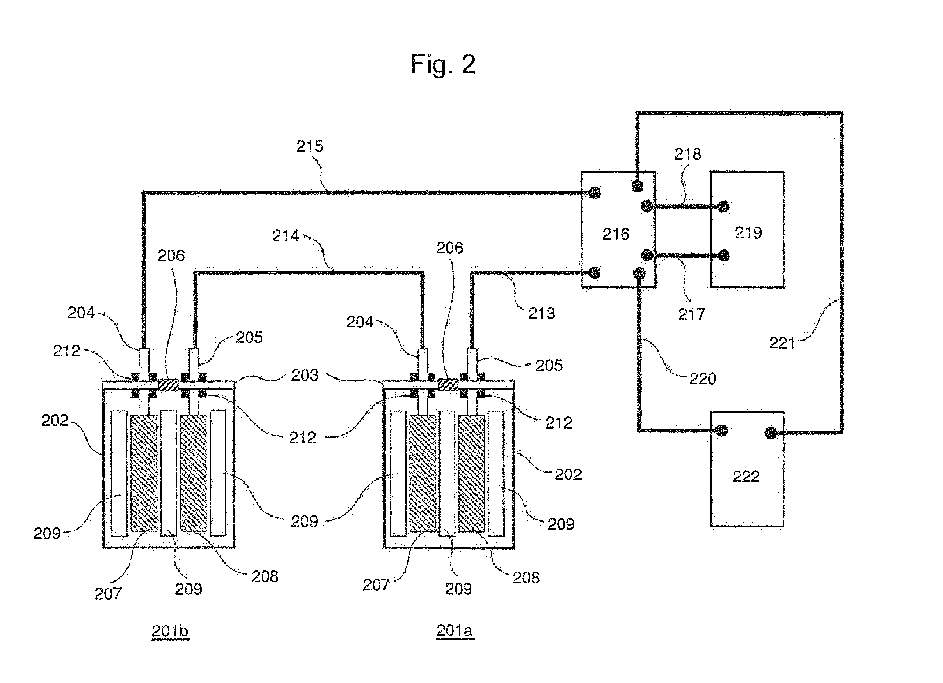

Fig. 2 shows a battery system (S1) obtained by connecting two lithium-ion batteries 201a and 201b in series. The number of series connections and parallel connections of the battery system can be changed, and the number of series connections of the battery corresponds to the output that is required.

The internal structures of the lithium-ion batteries 201a and 201b are similar to those of Fig. 1. Each of the lithium-ion batteries 201a and 201b has an electrode group with identical specifications including a cathode 207, an anode 208, and separators 209, and a cathode external terminal 204 and an anode external terminal 205 are connected to a battery cap 203. An insulating sealing member 212 is inserted between each external terminal and the battery case 202 to prevent a short between each external terminal. The battery cap 203 has a liquid injection port 206 through which an electrolytic solution is injected and that has a mechanism of cleaving when the pressure inside the battery has increased. Note that in Fig. 2, components corresponding to the cathode lead wire 110 and the anode lead wire 111 in Fig. 1 are omitted.

The anode external terminal 205 of the lithium-ion battery 201 a is connected to an anode input terminal of a charge/discharge controller 216 via a power cable 213. The cathode external terminal 204 of the lithium-ion battery 201a is coupled to the anode external terminal 205 of the lithium-ion battery 201b via a power cable 214. The cathode external terminal 204 of the lithium-ion battery 201b is connected to a cathode input terminal of the charge/discharge controller 216 via a power cable 215. With such a wire configuration, the two lithium-ion batteries 201a and 201b can be charged or discharged.

The charge/discharge controller 216 supplies and receives power to and from a device disposed outside (hereinafter referred to as an external device) 219 via power cables 217 and 218. The external device 219 includes various electric devices such as an external power supply or a regeneration motor form feeding power to the charge/discharge controller 216; and an inverter, a converter, and a load that are supplied with power from the present system. An inverter and the like may be provided according to the type of an alternating current or direct current corresponding to the external device. For such devices, known devices may be used as appropriate.

In addition, a power generation device 222 that mimics the operating conditions of a wind turbine generator is set as a device that generates renewable energy, and is connected to the charge/discharge controller 216 via electric cables 220 and 221. When the power generation device 222 generates power, the charge/discharge controller 216 switches mode to a charge mode, and feeds power to the external device 219 and also charges the lithium-ion batteries 212a and 212b with the surplus power. Meanwhile, when the amount of power generation that mimics a wind turbine generator is less than that required for the external device 219, the charge/discharge controller 216 operates so that the lithium-ion batteries 212a and 212b are discharged. Note that the power generation device 222 may be replaced with other power generation devices, namely, any device such as a solar battery, a geothermal power generation device, a fuel battery, or a gas turbine generator. The charge/discharge controller 216 has a program, which enables an automatic operation, stored so that the charge/discharge controller 216 performs the aforementioned operation.

### (Method for operating battery system)

The external device 219 was caused to be supplied with power during charge, and consume power during discharge. The external device 219 performs typical charge and discharge in which the rated capacity of the lithium-ion batteries 201a and 201b are obtained. For example, constant-voltage charge at 4.1 V or 4.2 V can be executed for 0.5 hour with a charge current of a 1 C-rate. The charge conditions are determined by a design such as the types and amounts of materials used for the lithium-ion batteries. Thus, optimum conditions are determined depending on the specifications of each battery.

After the lithium-ion batteries 201a and 201b are charged, the charge/discharge controller 216 is switched mode to a discharge mode, so that each battery is discharged. Typically, discharge is stopped when a given lower limit voltage is reached. In this embodiment, discharge at a 5 C-rate was performed, and a capacity higher than that when discharge at a 1 C-rate is performed by 90 % was obtained. Meanwhile, while the power generation device 222 that mimics a wind turbine generator was generating power, it was possible to perform discharge at a 3 C-rate.

Note that in the aforementioned examples, each component can be replaced with a known technology. For example, the power generation device can be replaced with any system that generates renewable energy such as sunlight, geothermal heat, or wave energy. In addition, when the external device 219 is replaced with a driving device such as an electric motor, it can be used for an electric vehicle, a hybrid electric vehicle, a plug-in hybrid electric vehicle, an electric construction machine, a conveying machine, a construction machine, nursing care equipment, a light vehicle, an electric power tool, a game machine, video equipment, a television, a vacuum cleaner, a robot, a portable terminal information device, a power storage system in an isolated island, a power supply for a space station, or the like.

According to such a battery system, it is possible to allow an electrolytic solution of a lithium-ion battery to exhibit a self-fire extinguishing function and improve the life.

### Reference Signs List

- 101, 201b: Lithium ion batteries
- 102, 202: Battery cases
- 103: Cap
- 104, 204: Cathode external terminals
- 105,205: Anode external terminals
- 106, 206: liquid injection ports
- 107,207: Cathodes
- 108,208: Anodes
- 109,209: Separators
- 110: Cathode lead wire
- 111: Anode lead wire
- 203: Battery Cap
- 213, 214, 215, 217, 218, 220, 221: Power Cables
- 216: Charge/discharge controller
- 219: External device
- 222: Device that generates renewable energy

## Claims

1. A lithium-ion battery comprising a cathode, an anode, and a non-aqueous electrolytic solution, wherein
the non-aqueous electrolytic solution contains 60 vol% or more of ethylene carbonate (EC) and dimethyl carbonate (DMC),
a volume ratio of the dimethyl carbonate to a sum of the ethylene carbonate and the dimethyl carbonate is 0.3 to 0.6,
the non-aqueous electrolytic solution contains LiPF₆ as an electrolyte, and the non-aqueous electrolytic solution contains 3 to 5 wt% of trimethyl phosphate (TMP) with respect to the total weight of the non-aqueous electrolytic solution.

2. The lithium-ion battery according to claim 1, wherein the non-aqueous electrolytic solution contains ethyl methyl carbonate.

3. The lithium-ion battery according to claim 1, wherein the non-aqueous electrolytic solution contains LiPF₆ and LiBF₄ as electrolytes, and a content of the LiBF₄ is less than or equal to 2/8 that of LiPF₆.

4. The lithium-ion battery according to claim 1, wherein
the non-aqueous electrolytic solution contains at least one of vinylene carbonate or sultone, and
an amount of addition of the vinylene carbonate and the sultone is 0.1 to 2 wt% with respect to the weight of the non-aqueous electrolytic solution.

5. The lithium-ion battery according to claim 1, comprising
a nonwoven fabric disposed in a vertical direction, the nonwoven fabric being damped with the electrolytic solution, wherein a fire extinguishing time of when a bottom of the nonwoven fabric is ignited is less than or equal to three seconds.

6. A battery system comprising mounted thereon the lithium-ion battery according to any one of claims 1 to 5.
